# FASCICULE DE BREVET EUROPEEN

(11) **EP 1 398 541 B1**
(45) Date de publication et mention de la délivrance du brevet: **02.11.2006**
(21) Numéro de dépôt: 03292230.4
(22) Date de dépôt: 11.09.2003
(51) Int. Cl.: F16H 25/22, B64C 13/28

(54) **Vérin à vis à moyen de bloquage en cas de passage sur écrou secondaire**
Spindelantrieb mit klemmender Vorrichtung beim belasten der zweiten Mutter
Screw actuator with clamping means when loading the secondary nut

(30) Priorité: 11.09.2002 FR 0211229
(43) Date de publication de la demande: 17.03.2004
(73) Titulaire: Goodrich Actuation Systems SAS, 78530 Buc (FR)
(72) Inventeur: Rodriguez, Fernand, 46100 Figeac (FR)
(74) Mandataire: Callon de Lamarck, Jean-Robert

(56) Documents cités:
- EP-A- 1 262 688
- EP-A- 1 283 384
- PATENT ABSTRACTS OF JAPAN vol. 1996, no. 12, 26 décembre 1996 (1996-12-26) & JP 08 210459 A (TSUBAKIMOTO CHAIN CO), 20 août 1996 (1996-08-20)
- PATENT ABSTRACTS OF JAPAN vol. 1995, no. 06, 31 juillet 1995 (1995-07-31) & JP 07 083304 A (SHIMPO IND CO LTD), 28 mars 1995 (1995-03-28)

## Description

L'invention concerne les vérins à vis dits « fail safe », c'est à dire les vérins à vis à deux écrous. Plus particulièrement, l'invention concerne les systèmes de détection de transfert de charge d'un écrou vers l'autre dans de tels vérins.

L'invention s'applique par exemple aux vérins, qu'ils soient de type à billes, à rouleaux ou encore à galets, utilisés pour l'orientation d'un plan horizontal réglable d'aéronef.

On connaît donc les vérins comportant un niveau de sécurité supplémentaire en la présence d'un second écrou qui, séparé de la vis par un léger jeu, reprend la charge du premier écrou en cas de défaillance de ce dernier.

Ces dispositifs, certes sécuritaires, présentent le danger qu'un fonctionnement reposant seulement sur le second écrou, après défaillance du premier, ne soit pas détecté. Le dispositif ne comporte alors plus son niveau de sécurité supplémentaire, et perd par là son intérêt initial.

On cherche ici à signaler ce mode de fonctionnement le plus rapidement possible afin d'éviter un mode de panne dormante.

On souhaite plus précisément que l'écrou secondaire, lorsque chargé en mode de défaillance, ne puisse continuer à remplir la fonction de transmission du mouvement. Ainsi, on souhaite l'apparition d'un blocage de l'écrou secondaire, qui assure qu'un fonctionnement en panne dormante ne perdure pas.

Typiquement, dans ce type de dispositif, on a adopté des écrous secondaires susceptibles de se gripper lorsque coopérant avec la vis.

Toutefois le grippage risque souvent de ne pas apparaître. Les efforts durant le vol peuvent par exemple ne pas être assez importants pour que l'écrou secondaire se grippe au contact de la vis.

Le document EP 1 283 384, publié après la date de priorité de la demande, divulgue les caractéristiques du préambule de la revendication 1.

Le but de l'invention est de proposer des moyens de blocage après passage des efforts sur l'écrou secondaire, moyens qui soient fiables en restant peu coûteux.

Ce but est atteint selon l'invention grâce à un vérin d'actionnement d'organe d'aéronef, conformément à la revendication 1.

D'autres buts, caractéristiques et avantages de l'invention apparaîtront à la lecture de la description détaillée qui va suivre, faite en référence aux figures annexées sur lesquelles :
- la figure 1 est une coupe d'un ensemble écrou primaire, écrou secondaire et contre-écrou selon l'invention ;
- la figure 2 est une vue en coupe agrandie d'un écrou secondaire et d'un contre-écrou selon l'invention ;
- la figure 3 est une même vue en coupe, à la rupture du pion ;
- la figure 4 est une même vue, après rupture du pion et mise en charge de l'écrou secondaire.

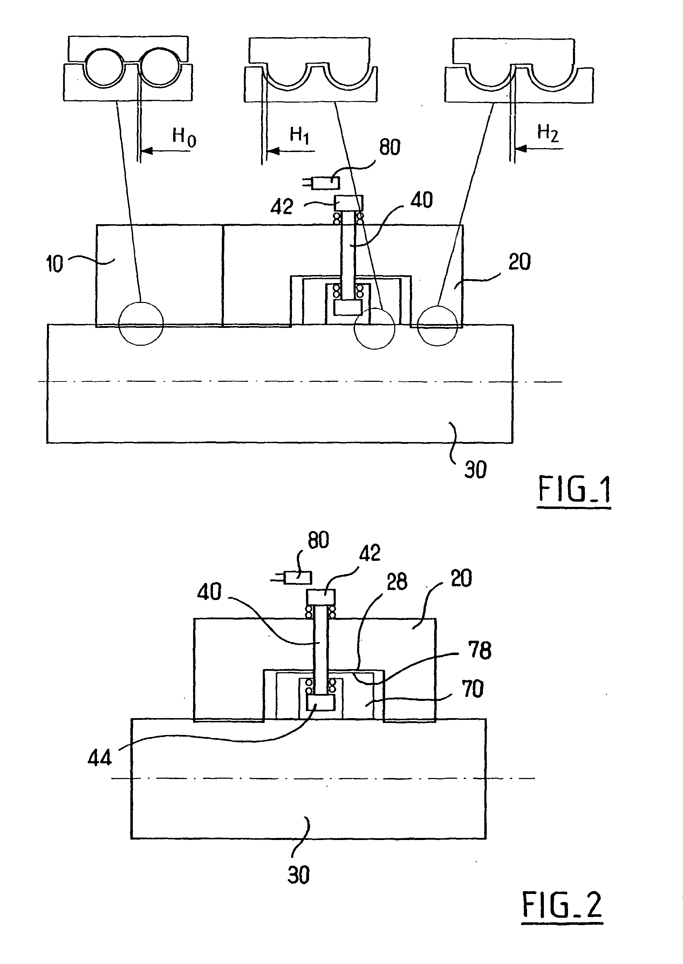

Le couple d'écrous 10, 20 de la figure 1 consiste en un écrou primaire 10 et un écrou secondaire 20 d'un vérin à vis dont la constitution est de type « fail safe ».

En fonctionnement normal, l'écrou primaire 10, ici à billes, est chargé et assure la transmission de la charge. L'écrou 10 transmet ici son mouvement du plan horizontal réglable (PHR) d'un avion, la vis 30 étant, elle, liée à la structure de l'avion.

L'écrou secondaire 20 présente, en regard du pas de la vis, un jeu suffisant pour n'être pas chargé dans le cas de fonctionnement normal où l'écrou primaire 10 reprend la charge.

L'écrou secondaire 20 est ici un écrou dont le pas de la vis est un simple filet mâle frottant, complémentaire au pas de la vis 30. Bien entendu, un écrou secondaire à billes serait également envisageable.

Des attaches entre les deux écrous 10 et 20 peuvent être prévues pour assurer une liaison asses lâche entre les deux écrous.

Le passage de charge sur l'écrou secondaire se fait par chargement de la liaison propre de l'écrou secondaire et déchargement de la liaison propre de l'écrou primaire.

Typiquement, on prévoit que chacun des écrous primaire 10 et secondaire 20 présente une liaison qui lui est propre avec l'élément commandé, ici le PHR.

Les attaches lâches prévues entre les deux écrous ne sont sollicitées que lorsque l'une des deux liaisons propres de ces écrous ne peut pas transmettre la charge, par exemple sous l'effet d'un endommagement accidentel. Aussi, si la liaison de l'écrou secondaire avec le PHR ne peut transmettre les contraintes, alors l'écrou secondaire, une fois en charge, transmet les contraintes au PHR via les attaches entre écrous, via l'écrou primaire, puis via la liaison propre de l'écrou primaire avec le PHR.

Dans ce dispositif, l'écrou secondaire 20 est équipé d'aménagements pour assurer le blocage de l'écrou secondaire après sa mise en charge.

Sur la figure 2, ces aménagements sont constitués d'un pion 40 qui traverse l'écrou secondaire 20 et d'un écrou supplémentaire appelé ci-après contre écrou, et référencé 70.

On voit que le contre-écrou 70 est de taille nettement plus faible que l'écrou secondaire 20, et placé dans une gorge interne annulaire de l'écrou secondaire 20.

Ainsi, dans la coupe longitudinale de la figure 2, le contre-écrou 70 se situe sous l'écrou secondaire 20, entre deux parois d'extrémité 24 et 26 de l'écrou secondaire 20.

Ainsi, en coupe, l'écrou secondaire 20 chevauche le contre-écrou 70 et l'encadre entre ses jambes 24 et 26. L'écrou secondaire 20 forme donc un tube autour du contre-écrou 70, tube qui vient se refermer sur le pas de la vis à chaque extrémité.

Le pion 40 précité vient, quant à lui, traverser ces deux éléments 20 et 70 à la fois. Pour cela, il traverse la paroi en tube de l'écrou 40, et vient traverser ensuite le contre-écrou, jusqu'à venir à proximité du pas de la vis.

Le contre-écrou 70 présente lui-même une gorge interne annulaire, il y reçoit une tête d'extrémité 44 du pion 40, tandis que la tête externe 42 du pion 40 émerge sur la face externe de l'écrou secondaire 20.

Lorsque l'écrou primaire 10 présente un jeu anormal avec la vis, lié à un endommagement de la liaison entre l'écrou primaire 10 et la vis 30, la charge est transmise de l'écrou primaire vers l'écrou secondaire 20, entraînant une réduction du jeu entre écrou secondaire 20 et vis 30. Ce jeu est référencé H2 sur la figure 1.

On notera qu'un jeu H0 prévu initialement entre écrou primaire 10 et vis 30 est inférieur au jeu H2, de sorte que seul un endommagement particulier de la liaison entre vis 30 et écrou primaire 10 peut provoquer un mouvement de l'écrou secondaire dans le jeu H2.

Enfin, le contre-écrou 70 présente lui-même un jeu H1 avec la vis.

Le jeu H1 est, lui, choisi supérieur au jeu H0 de l'écrou primaire 10 mais inférieur au jeu H2 de l'écrou secondaire 20. Ainsi, le jeu entre contre-écrou 70 et vis 30 étant inférieur au jeu entre écrou secondaire 20 et vis, la mise en charge de la vis secondaire 20 ne peut se produire qu'après sollicitation du contre-écrou 70.

La mise en charge finale de l'écrou secondaire 20 sur la vis 30 provoque alors obligatoirement un cisaillement du pion 40.

On exploite alors la rupture du pion 40 pour autoriser de ce fait une rotation relative entre écrou secondaire 20 et contre-écrou 70, qui viennent ensuite en butée l'un contre l'autre par rotation différentielle sur la vis, provoquant alors le blocage complet du vérin par un effet de serrage à double écrou.

Pour améliorer encore la mise en butée de l'écrou secondaire 20 et du contre-écrou 70, on notera que le pion 40 est muni d'un ressort dans la partie interne du contre-écrou 70, ressort interne qui provoque une mise en butée de la tête 44 du pion 40 contre le pas de la vis 30.

La tête 44 freine alors la rotation du contre-écrou 70, tandis que la rotation de l'écrou secondaire 20 n'est, elle, pas freinée.

Sous l'effet de freinage de la tête du pion 40, le contre-écrou 70 tend même à tourner de manière solidaire avec la vis. Ainsi, l'écrou 20 et le contre-écrou 70 butent rapidement l'un contre l'autre.

On notera que, du fait que le contre-écrou 70 est inclus dans l'écrou secondaire 20, c'est à dire borné par deux faces différentes de l'écrou 20, la mise en butée a lieu quel que soit le sens de rotation de la vis.

De manière préférentielle, on veille à ce qu'un coefficient de frottement entre contre-écrou 70 et écrou 20 soit particulièrement faible au niveau de leurs faces venant en contact l'une contre l'autre, de sorte que le contre-écrou 70 ne puisse entrer en rotation avec l'écrou 20 sans générer les contraintes nécessaires au blocage du système.

Les figures 1, 3 et 4 représentent respectivement les états des différents jeux H0, H1, H2, dans chacune des trois étapes successives décrites ci-dessus et menant au blocage.

Sur la figure 1, on a représenté un tel système dans son état initial, c'est à dire sans endommagement quelconque de l'écrou primaire 10.

On constate que le jeu H1 du contre-écrou 70 et le jeu H2 de l'écrou secondaire 20 sont suffisants pour ne pas faire coopérer ces éléments avec la vis lors d'un fonctionnement ordinaire du système.

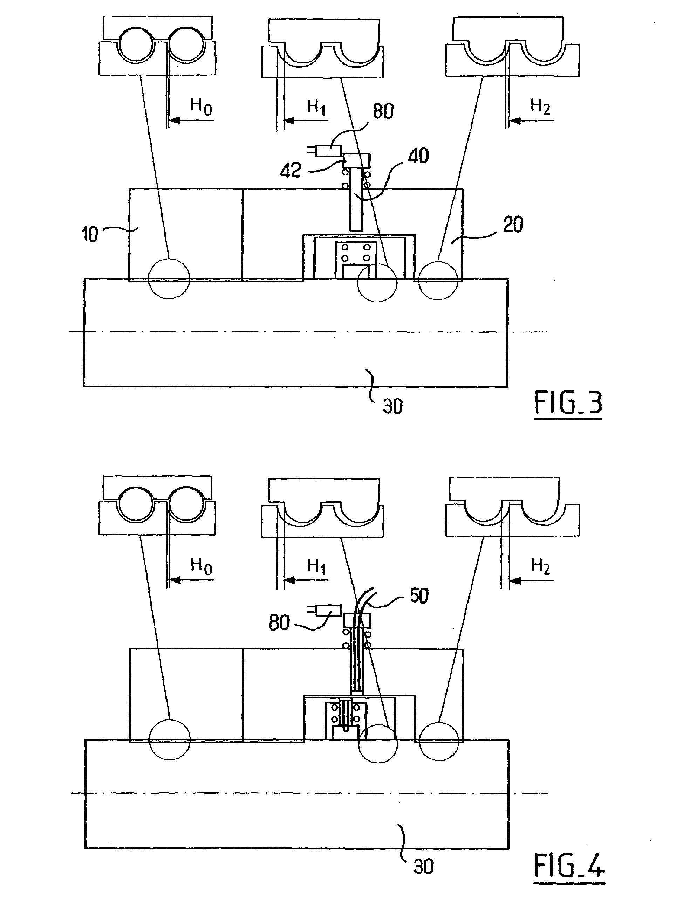

Sur la figure 3, on constate que l'apparition d'une usure au niveau de la liaison entre vis 30 et écrou primaire 10 provoque la mise en appui du contre-écrou 70 contre la vis 30, sans que l'écrou secondaire 20 vienne en appui sur la vis. En d'autres termes, l'écrou secondaire entraîné par l'écrou primaire repousse le contre-écrou 70 contre la vis sans venir lui-même au contact de cette dernière.

Sur la figure 3 également, le pion 40, sous l'effet de cette poussée, vient rompre et rend alors l'écrou secondaire libre d'engager la vis 30.

Sur la figure 4, l'écrou secondaire 20 est venu au contact du pas de la vis 30, et transmet lui-même la charge du PHR sur la vis. Le contre-écrou 70 est en appui contre une face interne de l'écrou secondaire après avoir été entraîné par la vis. Le contre-écrou 70 bloque l'écrou secondaire sur la vis. Les jeux H1 et H2 sont alors comblés de sorte que les pas de vis respectifs du contre-écrou 70 et de l'écrou secondaire 20 sont en engagement avec la vis 30.

Afin de confirmer la panne par une détection visuelle à l'examen du pion (par éjection des parties séparées par cisaillement) et assurer un désengagement complet des deux parties du fil pour éviter une reconnexion par contact, un ressort 60 est intercalé entre l'extrémité externe du pion 40 et une paroi de l'écrou secondaire, tel que représenté sur les figures.

Ainsi, comme représenté à la figure 3, le pion 40 présente avantageusement une tête élargie 42 à une de ses extrémités, un ressort hélicoïdal 60 s'appuyant d'une part sur cette tête élargie 42, d'autre part sur la portion externe de l'écrou 20.

Avantageusement, un fil conducteur 50 est contenu dans le pion 40, qui possède à cet effet un perçage, et un isolant entourant le fil à l'intérieur de ce perçage.

Le pion 40, par sa rupture, provoque directement ou indirectement la coupure électrique d'un fil de détection qui le parcourt, ici non représenté.

La rupture de ce fil conducteur 50 après cisaillement du pion 40 va empêcher la circulation du courant électrique surveillé et ainsi signaler la panne.

La coupure du fil 50 va en outre provoquer également une commande électronique d'immobilisation du vérin, jusqu'à une intervention de maintenance pour réparer le défaut.

Ce fil 50 est également relié ici, directement à un système d'alimentation commandant le positionnement du vérin de sorte qu'une immobilisation du vérin est commandée en réponse à la rupture du fil.

En outre, le ressort a ici pour rôle de produire lui-même, après rupture du pion, une tension longitudinale nécessaire à la rupture du fil 50.

Plus précisément ici, le jeu entre écrous secondaire 20 et contre-écrou 70 est suffisant pour produire une rupture par cisaillement du pion 40, mais insuffisant pour rompre en cisaillement le fil électrique 50 qui, lui, présente une certaine élasticité en cisaillement. Ainsi, la rupture de la liaison 50 apparaît, suite à la rupture du pion, seulement sous l'effet d'un effort longitudinal exercé par le ressort 60.

On notera que le fil électrique 50 est ici entouré dans une gaine souple isolante, qui outre la souplesse en cisaillement que celle-ci confère plus encore au fil 50, assure une barrière d'isolation entre le fil et l'ensemble des parties métalliques du système, évitant ainsi la production d'un courant parasite avant ou après rupture.

Selon une variante, le fil 50 est soudé aux deux extrémités du pion de cisaillement 40 à une partie très rigide assurant la continuité électrique du fil 50 au sein du pion. Cette partie très rigide permet d'assurer une cassure nette de la connexion électrique dans le cas où le déplacement réel du pion 40 est faible.

On notera que cet aménagement de blocage du vérin suite à une mise en charge de l'écrou secondaire 20 présente un avantage certain en lui-même, indépendamment du fait que le pion soit parcouru ou non par une liaison électrique.

Selon une variante avantageuse, on prévoit un interrupteur de détection 80 placé à proximité directe de la tête externe 42 du pion, actionné par la tête 42, lorsqu'elle est repoussée vers l'extérieur de l'écrou secondaire 20 sous l'effet du ressort externe du pion 40.

L'interrupteur 80 est par exemple un bras basculant, muni à son extrémité d'une excroissance située au vis à vis de l'écrou secondaire 20.

## Revendications

1. Vérin d'actionnement d'organe d'aéronef, comprenant essentiellement une vis (30) et au moins deux écrous (10, 20, 70) dont un primaire (10) et un secondaire (20) engagés autour de la vis, un mouvement relatif entre la vis (30) et les écrous (10, 20, 70) produisant ledit actionnement, l'écrou secondaire (20) étant disposé pour reprendre la charge de la vis au cas où l'écrou primaire est déficient, comprenant en outre un troisième écrou présentant, avec l'écrou secondaire, des portions en recouvrement (12, 22, 28, 78) l'une de l'autre, et un pion ruptible (40) traversant ces parties en recouvrement, le troisième écrou (70) étant lié en rotation à l'écrou secondaire (20) par le pion (40) de sorte qu'après rupture du pion (40), le troisième écrou (70) est libéré en rotation vis à vis de l'écrou secondaire (20), **caractérisé en ce que** le pion (40) porte une tête (44) dirigée en direction de la vis (30), et un ressort (60, 62) prévu pour repousser cette tête contre la vis (30) à la rupture du pion (40), de manière à freiner la rotation du troisième écrou (70) relativement à la vis après rupture du pion (40).

2. Vérin selon la revendication 1, **caractérisé en ce que** des jeux (H1, H2) existent entre le troisième écrou (70) et la vis (30), et entre l'écrou secondaire (20) et la vis (30), le jeu du troisième écrou (70) étant inférieur au jeu de l'écrou secondaire, de sorte qu'une translation de l'écrou secondaire (20) dans son jeu provoque la rupture du pion (40) avant une coopération mécanique entre l'écrou secondaire (20) et le pas de la vis (30).

3. Vérin selon la revendication 1 ou la revendication 2, **caractérisé en ce que** l'écrou secondaire (20) et le troisième écrou (70) présentent des faces respectives en vis à vis et transversales à la direction de la vis (30), prévues pour venir en butée l'une contre l'autre par déplacement relatif sur la vis (30) et bloquer alors la rotation entre l'écrou secondaire (20) et la vis (30).

4. Vérin selon l'une quelconque des revendications précédentes, **caractérisé en ce que** le pion (40) est parcouru par une liaison électrique (50) de sorte qu'un déplacement relatif de l'écrou secondaire (20) et du troisième écrou (70) provoque une rupture par cisaillement du pion (40) et une coupure de la liaison électrique (50).

5. Vérin selon la revendication précédente, **caractérisé en ce qu**'un jeu entre l'écrou secondaire (20) et le troisième écrou (70) est choisi pour produire une rupture par cisaillement du pion (40) sans produire de cisaillement de rupture de la liaison électrique (50), un ressort (60, 62) étant ménagé sur le pion (40) pour repousser les parties du pion séparées par le cisaillement et provoquer alors la rupture de la liaison par traction longitudinale sur la liaison (50).

6. Vérin selon l'une quelconque des revendications précédentes, **caractérisé en ce que** le pion (40) s'étend selon une direction radiale par rapport à l'axe principal de la vis (30).

7. Vérin selon l'une quelconque des revendications précédentes, **caractérisé en ce que** le pion (40) présente deux têtes élargies (42, 44) et est muni de deux ressorts hélicoïdaux (60, 62) placés chacun entre une tête élargie (42, 44) et une portion en recouvrement (12, 22, 28, 78) d'un écrou respectif (10, 20, 70).

8. Vérin selon l'une quelconque des revendications précédentes, **caractérisé en ce que** la liaison électrique (50) décrit un aller et retour dans le pion (40), dont le virage est situé à proximité de l'extrémité du pion (40) côté vis (30).

9. Vérin selon l'une quelconque des revendications précédentes, **caractérisé en ce qu**'il constitue un vérin du type à billes, galets ou rouleaux, c'est à dire dans lequel un écrou primaire (10) présente, sur sa face tournée vers la vis (30), une série de billes, galets ou rouleaux assurant les contacts de déplacement entre vis (30) et écrou (10).

## Claims

1. Aircraft member actuation jack, essentially comprising a screw (30) and at least two nuts (10, 20, 70), one of which being primary (10) and one being secondary (20), engaged around the screw, a relative movement between the screw (30) and the nuts (10, 20, 70) producing the said actuation, the secondary nut (20) being placed to take the load of the screw if the primary nut is defective, also comprising a third nut having, with the secondary nut, portions (12, 22, 28, 78) overlapping one another, and a shear pin (40) traversing these overlapping parts, the third nut (70) being rotationally connected to the secondary nut (20) by the pin (40) so that, after the shearing of the pin (40), the third nut (70) is rotationally released relative to the secondary nut (20), **characterized in that** the pin (40) supports a head (44) directed in the direction of the screw (30), and a spring (60, 62) provided to push this head against the screw (70) on shearing of the pin (40), in order to retard the rotation of the third nut (70) relative to the screw after shearing of the pin (40).

2. Jack according to Claim 1, **characterized in that** there are clearances (H1, H2) between the third nut (70) and the screw (30), and between the secondary nut (20) and the screw (30), the clearance of the third nut (70) being less than the clearance of the secondary nut, so that a translation of the secondary nut (20) in its clearance causes the pin (40) to shear before a mechanical interaction between the secondary nut (20) and the pitch of the screw (30).

3. Jack according to Claim 1 or Claim 2, **characterized in that** the secondary nut (20) and the third nut (70) have respective faces that are facing one another and transverse to the direction of the screw (30), designed to butt against one another by relative movement of the screw (30) and then stop the rotation between the secondary nut (20) and the screw (30).

4. Jack according to any one of the preceding claims, **characterized in that** the pin (40) is traversed by an electric connection (50) so that a relative movement of the secondary nut (20) and of the third nut (70) causes the pin (40) to shear and the electric connection (50) to disconnect.

5. Jack according to the preceding claim, **characterized in that** a clearance between the secondary nut (20) and the third nut (70) is chosen to produce a shearing of the pin (40) without producing a shearing of the electric connection (50), a spring (60, 62) being arranged on the pin (40) to push the parts of the pin separated by the shearing and then cause the connection to break by lengthwise pulling on the connection (50).

6. Jack according to any one of the preceding claims, **characterized in that** the pin (40) extends in a radial direction relative to the main axis of the screw (30).

7. Jack according to any one of the preceding claims, **characterized in that** the pin (40) has two enlarged heads (42, 44) and is furnished with two coil springs (60, 62) each placed between an enlarged head (42, 44) and an overlapping portion (12, 22, 28, 78) of a respective nut (10, 20, 70).

8. Jack according to any one of the preceding claims, **characterized in that** the electric connection (50) describes an outward and return journey in the pin (40), a bend thereof being situated close to the end of the pin (40) on the side of the screw (30).

9. Jack according to any one of the preceding claims, **characterized in that** it forms a jack of the ball, roller wheel or roller type, that is to say in which a primary nut (10) has, on its face turned towards the screw (30), a series of balls, roller wheels or rollers providing the moving contacts between the screw (30) and the nut (10).

## Patentansprüche

1. Antrieb zur Betätigung eines Organs eines Luftfahrzeuges, umfassend im wesentlichen eine Spindel (30) und wenigstens zwei Muttern (10, 20, 70), von denen eine erste (10) und eine zweite (20) um die Spindel herum in Eingriff stehen, wobei eine Relativbewegung zwischen der Spindel (30) und den Muttern (10, 20, 70) die genannte Betätigung erzeugt, wobei die zweite Mutter (20) angeordnet ist, um die Last der Spindel in dem Fall zu übernehmen, in dem die erste Mutter fehlerhaft ist, außerdem umfassend eine dritte Mutter, die mit der zweiten Mutter einander überdeckende Teile (12, 22, 28, 78) aufweist, und einen abbrechbaren Zapfen (40), der diese überdeckenden Teile durchsetzt, wobei die dritte Mutter (70) mit der zweiten Mutter (20) durch den Zapfen (40) rotationsmäßig derart verbunden ist, daß nach dem Bruch des Zapfens (40) die dritte Mutter (70) rotationsmäßig gegenüber der zweiten Mutter (20) freigesetzt wird, **dadurch gekennzeichnet, daß** der Zapfen (40) einen Kopf (44), der in Richtung der Spindel (30) gerichtet ist, und eine Feder (60, 62) trägt, die vorgesehen ist, um diesen Kopf beim Bruch des Zapfens (40) derart gegen die Spindel (30) zurückzudrücken, daß die Drehung der dritten Mutter (70) relativ zur Spindel nach dem Bruch des Zapfens (40) gebremst wird.

2. Antrieb nach Anspruch 1, **dadurch gekennzeichnet, daß** Spiele (H1, H2) zwischen der dritten Mutter (70) und der Spindel (30) und zwischen der zweiten Mutter (20) und der Spindel (30) vorliegen, wobei das Spiel der dritten Mutter (70) kleiner ist als das Spiel der zweiten Mutter, so daß eine Translation der zweiten Mutter (20) in ihrem Spiel den Bruch des Zapfens (40) vor einem mechanischen Zusammenwirken zwischen der zweiten Mutter (20) und dem Gewindegang der Spindel (30) hervorruft.

3. Antrieb nach Anspruch 1 oder Anspruch 2, **dadurch gekennzeichnet, daß** die zweite Mutter (20) und die dritte Mutter (70) jeweilige gegenüberliegende und zur Richtung der Spindel (30) querverlaufende Flächen aufweisen, die vorgesehen sind, um gegeneinander durch relative Verlagerung auf der Spindel (30) in Anschlag zu gelangen und dann die Drehung zwischen der zweiten Mutter (20) und der Spindel (30) zu blockieren.

4. Antrieb nach irgendeinem der vorhergehenden Ansprüche, **dadurch gekennzeichnet, daß** der Zapfen (40) von einer elektrischen Verbindung (50) derart durchlaufen wird, daß eine relative Verlagerung der zweiten Mutter (20) und der dritten Mutter (70) einen Scherungsbruch des Zapfens (40) und ein Durchtrennen der elektrischen Verbindung (50) hervorruft.

5. Antrieb nach dem vorhergehenden Anspruch, **dadurch gekennzeichnet, daß** ein Spiel zwischen der zweiten Mutter (20) und der dritten Mutter (70) gewählt ist, um einen Scherungsbruch des Zapfens (40) zu erzielen, ohne aber eine Scherungsbruch der elektrischen Verbindung (50) zu erzeugen, wobei eine Feder (60, 62) auf den Zapfen (40) aufgebracht ist, um die durch Scherung getrennten Teile des Zapfens zurückzudrücken und dann den Bruch der Verbindung durch Zugwirkung in Längrichtung auf die Verbindung (50) hervorzurufen.

6. Antrieb nach irgendeinem der vorhergehenden Ansprüche, **dadurch gekennzeichnet, daß** sich der Zapfen (40) in einer radialen Richtung erstreckt, bezogen auf die Hauptachse der Spindel (30).

7. Antrieb nach irgendeinem der vorhergehenden Ansprüche, **dadurch gekennzeichnet, daß** der Zapfen (40) zwei verbreiterte Köpfe (42, 44) aufweist und mit zwei wendelförmigen Federn (60, 62) versehen ist, die jeweils zwischen einem verbreiterten Kopf (42, 44) und einem überdeckenden Teil (12, 22, 28, 78) einer jeweiligen Mutter (10, 20, 70) angeordnet sind.

8. Antrieb nach irgendeinem der vorhergehenden Ansprüche, **dadurch gekennzeichnet, daß** die elektrische Verbindung (50) einen Hin- und Herweg im Zapfen (40) beschreibt, dessen Krümmung in der Nähe des Endes des Zapfens (40) nahe der Spindel (30) gelegen ist.

9. Antrieb nach irgendeinem der vorhergehenden Ansprüche, **dadurch gekennzeichnet, daß** er einen Antrieb von dem Typ mit Kugeln, Walzen oder Rollen bildet, das heißt, bei welchem die erste Mutter (10) auf ihrer der Spindel (30) zugewandten Fläche eine Reihe von Kugeln, Walzen oder Rollen aufweist, die die Kontakte zur Verlagerung zwischen der Spindel (30) und der Mutter (10) sicherstellen.
